(19) Europäisches Patentamt
European Patent Office
Office européen des brevets

(11) EP 3 815 787 A1

(12) **EUROPEAN PATENT APPLICATION**

(43) Date of publication:
**05.05.2021 Bulletin 2021/18**

(21) Application number: **19206941.7**

(22) Date of filing: **04.11.2019**

(51) Int Cl.:
***B01J 38/04*** *(2006.01)* ***B01J 23/22*** *(2006.01)*
***B01J 23/28*** *(2006.01)* ***B01J 23/30*** *(2006.01)*
***B01D 53/86*** *(2006.01)* *B01J 38/02 (2006.01)*
*B01D 53/94 (2006.01)* *B01J 35/04 (2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **UMICORE AG & CO. KG**
**63457 Hanau-Wolfgang (DE)**

(72) Inventors:
- **Christensen, Steen Riis**
  **2200 Copenhagen (DK)**
- **Larsen, Jesper Sargent**
  **2860 Soeborg (DK)**
- **Pedersen, Kim Hougaard**
  **2830 Virum (DK)**

# (54) LOW TEMPERATURE REGENERATION METHOD OF SULFATE-DEACTIVATED SCR CATALYSTS USING NO2 INJECTION

(57) The present invention provides a method for the removal of ammonium bisulfate and/or ammonium sulfate from a selective catalytic reduction converter in a combustion facility, wherein the selective catalytic reduction converter is selected from substrates coated and/or impregnated with a selective catalytic reduction catalyst, extruded SCR converters and SCR plate catalyst, and wherein the combustion facility comprises means for measuring the relative activity of the $NO_x$ conversion of the selective catalytic reduction converter and/or the $NH_3$ slip concentration. The method comprises the steps of passing flue gas through a converter for the selective catalytic reduction of nitrogen oxides in the presence of ammonia added to the flue gas either as such or in the form of a precursor thereof, injecting a gas containing nitrogen dioxide into the flue gas upstream of the converter for selective catalytic reduction at a flue gas temperature of between 150 and 330°C, wherein the gas containing nitrogen dioxide is added in an amount that keeps the relative activity of the selective reduction catalyst at a value of higher than or equal to 40 %, or wherein the gas containing nitrogen dioxide is added in an amount that keeps the $NH_3$ slip below 20 ppm $NH_3$.

Fig. 3

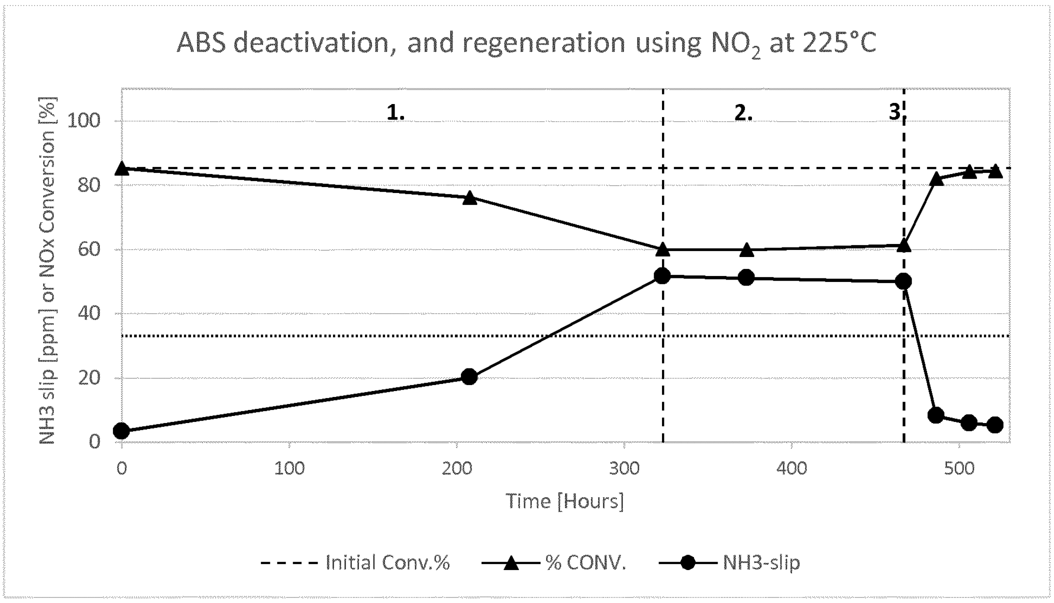


EP 3 815 787 A1

## Description

The present invention provides a method for the regeneration of catalysts for denitrification (DeNOx) by selective catalytic reduction (SCR) which have been deactivated by the accumulation of ammonium bisulfate (ABS).

## Problem to be solved by the invention

Denitrification (DeNOx) of flue gas is usually performed by means of a selective catalytic reduction catalyst (SCR) in the presence of ammonia. When using SCR within sulfurcontaining exhaust gas, the minimum process temperature in SCR DeNOx with a nitrogen-containing reducing agent is determined by the formation temperature of ammonium salts. When ammonia or other ammonia precursors are injected as a $NO_x$ reducing agent into the plant, they not only reduce nitrogen oxides, but they also form ammonia salts with other flue gas components. Many flue gases comprise sulfur oxides, such as $SO_2$ and $SO_3$. Ammonium bisulfate $NH_4HSO_4$, also known as ABS, is formed by the reaction of ammonia and sulfur oxides, according to the following reactions:

$$SO_2 + ½O_2 \rightarrow SO_3 \qquad (1)$$

$$SO_3 + H_2O \rightarrow H_2SO_4 \qquad (2)$$

$$NH_{3(g)} + H_2SO_{4(g)} \rightarrow NH_4HSO_{4(l)} \qquad (3)$$

In the presence of oxygen and water, $SO_2$ is oxidized to $SO_3$ and subsequently forms sulfuric acid. Gaseous sulfuric acid $H_2SO_{4(g)}$ and gaseous ammonia $NH_{3(g)}$ can then form liquid ammonium bisulfate $NH_4HSO_{4(l)}$.

The selective catalytic reduction (SCR) is a means of converting nitrogen oxides, also referred to as $NO_x$, with the aid of a catalyst into nitrogen ($N_2$) and water ($H_2O$). A gaseous reductant, typically anhydrous ammonia, aqueous ammonia or an aqueous ammonia precursor, is added to the stream of flue or exhaust gas and is adsorbed onto a catalyst. Aqueous ammonia precursors are, for instance, urea or ammonium carbamate. The ammonia precursors can easily be decomposed to release ammonia when heated. Carbon dioxide ($CO_2$) is a second reaction product when urea is used as the reductant. The standard reactions when urea is used as the reductant are as follows:

Thermolysis of urea to ammonia and isocyanic acid

$$(NH_2)_2CO \rightarrow NH_3 + HNCO \qquad (4)$$

Hydrolysis:
Isocyanic acid reacts with water to form additional ammonia and carbon dioxide

$$HNCO + H_2O \rightarrow NH_3 + CO_2 \qquad (5)$$

Reduction of the nitrogen oxides by means of selective catalytic reduction:

a) Standard SCR

$$4\ NO + 4\ NH_3 + O_2 \rightarrow 4\ N_2 + 6\ H_2O \qquad (6)$$

b) Fast SCR:

$$NO + 2\ NH_3 + NO_2 \rightarrow 2\ N_2 + 3\ H_2O \qquad (7)$$

c) "$NO_2$ SCR" or slow SCR

$$8\ NH_3 + 6\ NO_2 \rightarrow 7\ N_2 + 12\ H_2O \qquad (8)$$

The bulk dew point of ABS depends on the partial pressure of $NH_3$ and $H_2SO_4$ and the bulk ABS dew point is typically in the range between 250 and 320°C. Below the dew point, ammonia and sulphuric acid condense and form liquid ammonium bisulfate on the surface of the catalyst. It is known that SCR catalysts are deactivated when operated below the ammonium bisulfate (ABS) dew point temperature due to the physical blocking of the pore structures of the SCR catalyst by ABS. Furthermore, in the narrow pore structure of a catalyst, ABS will even form at temperatures above the bulk dew point due to capillary forces, resulting in partially blocked pores and therefore in a partially deactivated catalyst. It is known to the skilled person that a deactivated (or partially deactivated) SCR catalyst can be regenerated by increasing the temperature to approximately 350°C or higher for a certain period of time during which ABS will decompose and evaporate according to the reverse reaction of equation (3).

In H Yufeng, X Jianming: "The Effects of Flue Gas SO3 on the Operation of Coal-Fired Units and Countermeasures", IJEPE 2018, 7, 27-32, the formation of $SO_3$ in coal-fired powerplants and its effects are discussed. Catalysts based on $V_2O_5/TiO_2$ are widely used as SCR catalysts for the denitrification of flue gas, and $V_2O_5$ can catalyse the oxidation of $SO_2$. With the increase of the $V_2O_5$ content in a catalyst, the oxidation rate of $SO_2$ rises. Furthermore, the oxidation rate of $SO_2$ rises gradually with the increase of the reaction temperature. It is known that $SO_3$ has great influence on the acid dew point of the flue gas. When the temperature is below 350°C, $SO_3$ can react with $NH_3$, thus generating ammonium bisulfate (ABS) or ammonium sulfate (AS) in the SCR reactor. Typically a "minimum operating temperature" (MOT) is defined which is a temperature at which the catalyst will only be deactivated in such an amount that the plant can still reduce the required amount of NOx. When the unit operates at low load, the temperature of the SCR reactor decreases, and the produced ammonium bisulfate (ABS) will deposit in the pores of the catalyst, thus reducing its surface area and covering its active sites, thereby deactivating the catalyst. If this deposition does not exceed a certain amount, this process is reversible. However, the effective removal of ammonium bisulfate from catalysts requires the recovery of the catalyst at high temperatures of above 350°C. One measure to reduce the deposition of ammonium bisulfate is that the catalyst temperature should be higher than the minimum condensation temperature necessary for the SCR reaction to operate. Another option is to spray alkaline sorbents into the flue gas for the removal of sulfur, either in dry form or in wet form. Suitable sorbents for dry spraying are CaO, MgO, $Na_2CO_3$ and trisodium hydrogendicarbonate dihydrate (trona). Suitable sorbents for wet spraying are $NaHSO_3$ (sodium bisulfate, SBS), $Mg(OH)_2$ and $Ca(OH)_2$, in either case filters are required before the SCR reaction to retain the particles from entering the catalyst and deactivating it. These filters can for instance be bag filters or an electrostatic precipitator.

In X Wang, X Du, L Zhang, G Yang, Y Chen and J Ran: "Simultaneous Fast Decomposition of NH4HSO4 and Efficient NOx Removal by NO2 Addition: An Option for NOx Removal in H2O/SO2-Contained Flue Gas at a Low Temperature", Energy Fuels 2018, 32, 6990-6994 and in X Wang, X Du, L Zhang, Y Cheng and G Yang: "Promotion of NH4HSO4 decomposition in NO/NO2 contained atmosphere at low temperature over V2O5-WO3/TiO2 catalyst for NO reduction", Appl Catal A 2018, it was shown that ABS can be reduced across a vanadium based catalyst using $NO_2$. A granulated catalyst containing 1 wt.-% $V_2O_5$ and 5 wt.-% $TiO_2$ was tested. The catalyst was preloaded with 30 wt.-% ABS, which was deposited by wet impregnation of an aqueous solution containing ABS, followed by 5 hours of drying at 110°C. It was demonstrated that the SCR reaction could be carried out across the ABS containing catalyst using a gas containing 5 % $O_2$, 500 ppm $NO_x$, 0 ppm $NH_3$ and balance $N_2$ at temperatures around 300 to 350°C when no $NO_2$ was present in the exhaust gas. As the $NO_2$ content was increased, the temperature at which DeNOx was observed decreased to as low as 100°C, still without adding $NH_3$. The fact that the DeNOx proceeded without $NH_3$ present in the exhaust gas showed that NO and $NO_2$ are able to react directly with $NH_3$ present in ABS, and can therefore remove the physical hindrance caused by ABS on the catalytic surface.

It was also shown that the addition of $NO_2$ could keep the activity of the catalyst high even after addition of 1000 ppm $SO_2$ when $NO_2$ was present in at least 10% of the total $NO_x$ at 250°C. This indicated that the reaction of $NO_2$ with ABS is faster than the deactivation by ABS produced through the oxidation of $SO_2$ when $NO_2$ is present in an amount larger than 50 ppm. However, it was not shown that the catalyst could be regenerated from ABS by the use of $NO_2$. By contrast, it was demonstrated that adding $NO_2$ could prohibit the deactivation of ABS. Furthermore, the added ABS was not generated by $SO_2$ oxidation and reaction with ammonia as it happens in the industry, instead ABS was added by wet impregnation.

WO 2018/184921 A1 and WO 2018/197175 A1 disclose a method and a system for the removal of nitrogen oxides, volatile organic compounds and particulate matter from engine exhaust gas or from off-gases, respectively, at cold start conditions. The invention is based on forming $NO_2$ externally to the exhaust gas cleaning system in an exhaust gas channel and injecting the prepared $NO_2$ into the engine exhaust gas in an amount that promoted the fast SCR reaction. $NO_2$ can be formed from $NH_3$ by oxidation of the $NH_3$ to NO over a precious metal containing catalyst in a first step and subsequently oxidized to $NO_2$ in a second step. SCR catalysts show a relatively low efficiency at cold start conditions below exhaust gas temperatures at 250°C. Due to the injection of $NO_2$ into the engine exhaust gas during cold start temperatures in order to promote the "fast" SCR reaction, this problem is solved. This reaction is responsible for the promotion of low temperature SCR by $NO_2$. However, WO 2018/184921 A1 and WO 2018/197175 A1 are silent about the formation of ABS and the problems arising therefrom, because a low sulfur fuel is used in the automotive industry (<10 ppm S), and hence ABS is not produced within automotive engines.

In the prior art it has therefore been found how to produce the said $NO_2$ and also the effect of adding $NO_2$ to the exhaust or off-gas in case of a granulated catalyst which has been wet impregnated by ABS. However, it was not investigated how the addition of $NO_2$ effects a monolith catalyst which has been deactivated by ABS formed due to the

presence of $SO_2$, $SO_3$, and $NH_3$. Furthermore, when using monolith catalyst, the SCR reactions are known to be diffusion-controlled in which case the reaction happens on the surface of the catalyst, therefore, it is unknown whether the addition of $NO_2$ will be able to consume ABS within the pore structure or if it will just be consumed through the fast SCR reaction, now that $NH_3$ is present for regular SCR operation Furthermore, the skilled person knows that $NO_2$ can oxide $SO_2$, and thus, the addition of $NO_2$ to a flue gas containing $SO_2$ can increase the formation of $SO_3$.

It is therefore an aim of the present invention to provide a method for the regeneration of DeNOx catalysts or catalytic filters from the deactivation caused by ammonium sulfates, namely ammonium bisulfate (ABS) and/or ammonium sulfate (AS).

## Solution of the problem

The present invention provides a method for the removal of ammonium bisulfate and/or ammonium sulfate from a selective catalytic reduction converter in a facility generating flue gas, wherein the selective catalytic reduction converter is selected from substrates coated and/or impregnated with a selective catalytic reduction catalyst, extruded SCR converters and SCR plate catalysts, and wherein the facility generating flue gas comprises means for measuring the relative activity of the $NO_x$ conversion and/or the $NH_3$ slip concentration of the selective catalytic reduction converter, and wherein the method comprises the steps of

- passing flue gas through a converter for the selective catalytic reduction of nitrogen oxides in the presence of ammonia added to the flue gas either as such or in the form of a precursor thereof,
- injecting a gas containing nitrogen dioxide into the flue gas upstream of the converter for selective catalytic reduction at a flue gas temperature of between 150 and 330°C

    ◦ wherein the gas containing nitrogen dioxide is added in an amount that keeps the relative activity of the selective reduction catalyst at a value of higher than or equal to 40 %
    and/or
    ◦ wherein the gas containing nitrogen dioxide is added in an amount that keeps the $NH_3$ slip below 20 ppm $NH_3$.

It has surprisingly been found that the injection of a gas containing nitrogen dioxide into the flue gas effects the decomposition of ammonium bisulfate (ABS) and/or ammonium sulfate (AS) and thus is suitable to regenerate deactivated selective catalytic reduction converters. Selective catalytic reduction converters are hereinafter referred to as SCR converters.

The method according to the present invention is particularly suitable for, but not limited to the regeneration of SCR converters which do not withstand temperatures of 350°C and higher.

The method for the removal of ammonium bisulfate and/or ammonium sulfate from a selective catalytic reduction converter in a facility generating flue gas is explained below, with the invention encompassing all the embodiments indicated below, both individually and in combination with one another. The SCR converter comprises a substrate and a selective catalytic reduction catalyst, i.e. an SCR catalyst, as explained below.

In the context of the present invention, facilities generating flue gas include, but are not limited to combustion facilities such as power plants and waste-to-energy plants, and furthermore marine propulsion systems, glass smelting furnaces, cement plants and glass kilns. The term "facilities generating flue gas" is not to be understood in such a way that flue gas is the only product generated by such facilities. The flue gas is a by-product generated by these facilities, and the main products are, for instance, electrical or thermal energy.

The terms "exhaust gas" and "flue gas" are used synonymously in the context of the present invention.

The SCR catalyst contains a carrier material selected from $TiO_2$, $SiO_2$, $Al_2O_3$ and mixtures thereof, and $V_2O_5$ and optionally $WO_3$ and/or $MoO_3$ as the catalytically active metal oxides. Preferably, the SCR catalyst comprises 0.1-20 wt.-% of $V_2O_5$, preferably 0.1-5 wt.-% of $V_2O_5$, and 0.0-10 wt.-% of $WO_3$ and/or $MoO_3$, and 0-20 wt.-% of $SiO_2$, preferably 3-12 wt.-% of $SiO_2$, wherein the remainder is represented by $TiO_2$, $Al_2O_3$ or mixtures of $TiO_2$ and $Al_2O_3$.

In one embodiment, the SCR catalyst comprises 0.1-20 wt.-% $V_2O_5$, but neither $WO_3$ nor $MoO_3$. In another embodiment, the SCR catalyst comprises 0.1-10 wt.-% $WO_3$, preferably 0.3-7 wt.-% $WO_3$.

Optionally, the carrier material can be doped with 0.05 to 5 wt.-% of an oxide selected from oxides of lanthanum, oxides of zirconium, oxides of cerium and oxides of antimony and combinations and mixtures thereof. Suitable oxides which can be used alone or in combination with one another are, for instance $La_2O_3$, $ZrO_2$, $CeO_2$, $Sb_2O_3$ and $Sb_2O_5$, and combinations and mixtures thereof. The amount of 0.5 to 5 wt.-% is based on the total weight of the SCR catalyst.

In the context of the present invention, the term "SCR catalyst" refers to the mixture of the carrier material and the one or more catalytically active metal oxide.

The SCR catalyst is impregnated and/or coated onto a substrate. The substrate can be a monolith, for instance a wall-flow filter or a flow-through monolith. Furthermore, the substrate can be selected from ceramic candle filters, corrugated substrates, bag filters or catalyst pellets.

"Coating an SCR catalyst onto a substrate" means that a slurry comprising the mixture of the carrier material and the one or more catalytically active metal oxide is prepared and then applied onto the substrate. Subsequently, the coated catalyst is dried. A "slurry" is a mixture of solids suspended in liquid. In the context of the present invention, the solids are fine particles of the carrier material and the one or more catalytically active metal oxide. The liquid is preferably water.

"Impregnating an SCR catalyst onto a substrate" means that a liquid comprising the carrier material and precursors of the one or more catalytically active metal oxides is prepared and adsorbed onto the substrate. Afterwards, the substrate with the impregnation liquid adsorbed thereto is dried at a temperature sufficient to convert the precursors of the one or more catalytically active metal oxide into the one or more catalytically active metal oxide. The skilled person knows suitable precursors, methods for impregnating substrates with them, and also temperatures sufficient to convert the precursors into the catalytically active metal oxides. These temperatures usually range between 100 and 600°C, depending on the respective precursors.

It is furthermore possible to combine coating and impregnation. This means that some of the carrier materials and/or catalytically active metal oxides are applied by coating, and other carrier materials and/or catalytically active metal oxides are applied by impregnation.

In another embodiment according to the present invention, the SCR converter is a so-called "extruded SCR converter". Such SCR converters are well-known. They are made by providing a dispersion comprising particles and/or fibers and/or binders of the substrate material, particles of the carrier material, and particles and/or precursors of the catalytically active metal oxides. The dispersion is extruded, and thereby the SCR converter is formed.

In yet another embodiment of the present invention, the SCR converter is a so-called "SCR plate catalyst". SCR plate catalysts are also well-known. A dispersion or paste comprising particles and/or precursors of the catalytically active materials, particles of the carrier material and optionally binders are applied onto a metal mesh substrate to form a catalyst unit. Mostly, the metal mesh substrate comprises of stainless steel. The catalyst units are assembled in a frame to form a catalyst module. The frames preferably consist of welded steel.

In the context of the present invention, the substrate which is coated and/or impregnated with an SCR catalyst is referred to as the "SCR converter" or the "selective catalytic reduction converter" or "the converter for the selective catalytic reduction".

The $NO_x$ concentration is usually measured at the inlet and the outlet ends of the SCR converter. The respective $NO_x$ concentration can be determined, for instance, by a chemiluminescence detector (CLD), Fourier transform infrared spectroscopy (FTIR), or infrared spectroscopy (IR). These methods to determine $NO_x$ concentrations are well known to the skilled artisan and can be applied in the present invention without departing from the scope of the claims.

The $NO_x$ concentrations measured at the inlet and the outlet end of an SCR converter can be used to determine resp. to calculate the $NO_x$ conversion within the catalyst as well as the activity of the catalyst.

The relative activity is the activity of the catalyst at a particular time compared to the original activity of the fresh catalyst when the SCR converter was started with fresh catalyst. In the context of the present invention, the "original activity" is the maximum $NO_x$ conversion of the SCR catalyst at a given temperature.

Based on the inlet and outlet $NO_x$ concentration, the $NO_x$ conversion is calculated as

$$X = \frac{(NOx_{in} - NOx_{out})}{NOx_{in}} * 100\% \qquad (9)$$

wherein

X: $NO_x$ conversion in percent

$NOx_{in}$: $NO_x$ concentration at the inlet end of the SCR converter

$NOx_{out}$: $NO_x$ concentration at the outlet end of the SCR converter

The $NO_x$ concentrations at the inlet resp. the outlet end can be indicated in mol or as mass.

The catalyst activity k is calculated on the basis of the $NO_x$ conversion:

$$k = \frac{v0}{V} * -ln(1 - X) \qquad (10)$$

or

$$k = \frac{v0}{W} * -ln(1 - X) \qquad (11)$$

wherein

k: catalyst activity
v0: total flow of exhaust gas by volume or by mass
V: volume of the catalyst
W: mass of the catalyst
X: $NO_x$ conversion

As an alternative to the measurement of the relative activity as described above, it is also possible to measure the ammonia slip ($NH_3$ slip) at the outlet end of the SCR converter. The ammonia slip is usually measured by FTIR. In this embodiment, it is not necessary to measure the $NO_x$ concentration at the inlet end of the SCR catalytic converter. By contrast, the measurement of the ammonia slip according to the present invention requires measuring the $NH_3$ slip at the outlet end of the SCR converter. If the SCR converter is deactivated due to the formation of ABS and AS, the ammonia added to the flue gas which reduces $NO_x$ has to increase to maintain a sufficient $NO_x$ conversion, and the amount of unconsumed ammonia exhausted at the outlet end of the SCR converter increases. Ammonia exhausted at the outlet end of an SCR converter is known as "ammonia slip".

The ammonia added to the flue gas either as such or in the form of a precursor thereof is selected from aqueous ammonia, anhydrous ammonia, an aqueous urea solution, an aqueous ammonium formate solution and ammonium carbamate. It is known to the skilled person that urea, ammonium carbamate and ammonium formate are ammonium precursors that can easily be decomposed to ammonia. The ammonia acts as a reductant in the SCR reaction and can be applied via spraying or injection. Devices for spraying or injecting ammonia or a precursor thereof are known and can be used in the method according to the present invention without departing from the scope of the claims.

As already explained, ammonia or other ammonia precursors which are injected as a $NO_x$ reducing agent into the plant not only reduce nitrogen oxides, but they also form ammonia salts with other flue gas components, in particular ammonium bisulfate (ABS) and ammonium sulfate (AS). ABS and AS deactivate the SCR converter, whereby the $NO_x$ conversion rate decreases.

This deactivation of the SCR converter is prevented by injecting a gas containing nitrogen dioxide into the flue gas upstream of the SCR converter. In the presence of $NO_2$, ABS will decompose and evaporate according to the reverse of equations (3) and (2) above. Thereby, the SCR converter resp. the SCR catalyst regenerates.

It has to be noted that the uncleaned flue gas will already comprise $NO_2$. However, as already stated, during the operation of the facility, it may happen that the amount of $NO_2$ in the flue gas drops to a level which is too low to prevent the formation of ABS and/or to decompose it. In the prior art, the facility would then be heated in order to thermally decompose the ABS. By contrast, according to the method of the present invention, a gas containing $NO_2$ is added to the flue gas in order to keep the relative activity of the SCR catalyst at a value of higher than or equal to 40% and/or in order to keep the $NH_3$ slip below 20 ppm $NH_3$. Thus, the "total amount of $NO_2$ within the SCR converter" is the sum of $NO_2$ coming from the uncleaned flue gas plus the amount of $NO_2$ added by injecting a gas containing nitrogen dioxide into the flue gas upstream of the SCR converter.

The $NO_2$ comprised in the injected gas is thus added in addition to the $NO_2$ created by the process performed by the "facility generating flue gas" as defined above. The $NO_2$ created by the process performed by the "facility generating flue gas" is the "uncleaned flue gas".

The temperature during the injection of $NO_2$ into the flue gas is between 150 and 300°C, preferably between 175 and 300°C, and even more preferably between 200 and 300°C, and most preferably between 225 and 275°C. This temperature range allows for a sufficiently fast regeneration of the SCR converter resp. the SCR catalyst and avoids at the same time a damage of SCR converters which do not withstand temperatures of 350°C and higher and are thus not accessible to thermal regeneration. In some embodiments, the temperature in the SCR converter is raised to the temperature ranges as given above in combination with the $NO_2$ injection. It is obvious for the skilled person that the temperature during injection of $NO_2$ into the flue gas affects the time required for the regeneration of the SCR converter resp. the SCR catalyst. The skilled person can determine the time needed for regeneration in connection with the temperature chosen for the injection of $NO_2$ and adapt these parameters according to the requirements of the facility generating flue gas to the specific needs without departing from the scope of the claims.

In one embodiment, the nitrogen dioxide is added in an amount that keeps the relative activity of the SCR converter at a value of higher than or equal to 40 %, preferably higher than or equal to 60 %, and even more preferably higher than or equal to 80 %. The relative activity of the SCR catalyst can easily be determined as described above.
In another embodiment, the nitrogen dioxide is added in an amount that keeps the ammonia slip of the SCR converter at a value of lower than or equal to 20 ppm, preferably lower than or equal to 10 ppm, and even more preferably lower than or equal to 5 ppm.

$NO_2$ is injected in such an amount that the total amount of $NO_2$ in the selective catalytic reduction converter is permanently larger than 0 ppm and smaller than or equal to 1,000 ppm, preferably 50 to 500 ppm, and more preferably 100 to 300 ppm. The injection can take place continuously or in intervals under the prerequisite that the relative activity of the SCR catalyst and/or the ammonia slip is kept at the values as defined above. An $NO_2$ injection in intervals can be carried out, for instance, by injecting $NO_2$ only if the relative activity of the SCR catalyst has fallen below a predetermined threshold. This threshold can be, for instance, the value of higher than or equal to 40 %, preferably higher than or equal to 60 %, and even more preferably higher than or equal to 80 % as given above.

Alternatively, the $NO_2$ injection in intervals can also be carried out in predetermined time intervals and/or in order to keep the relative activity of the SCR catalyst at a value of higher than or equal to 40, 45, 50, 55, 60, 65, 70, 75 or 80 %. Thus, the following options for injecting the $NO_2$ in intervals are possible:

1. injecting $NO_2$ in order to keep the relative activity of the SCR converter at a value of higher than or equal to 40, 45, 50, 55, 60, 65, 70, 75 or 80 %, or
2. injecting $NO_2$ in order to keep the $NH_3$ slip of SCR converter at a value of lower than or equal to 20, 19, 18, 17, 16, 15, 16, 14, 13, 12, 11, 10, 9, 8, 7, 6, 5, 4, 3, 2 or 1 ppm,
3. injecting $NO_2$ at predetermined time intervals.

Option 1 or 2 are particularly applicable if it is not already known by prior empirical data during which time intervals the relative activity and/or $NH_3$ slip of the SCR catalyst will fall below a specific threshold value, wherein the threshold value can be freely selected between 40 and 80% relative activity and/or below 20 ppm $NH_3$ slip as described above. Analogously, option 3 is particularly applicable if it is already known by prior empirical data during which time intervals the $NH_3$ slip and/or the relative activity of the SCR converter will rise above a specific threshold value, wherein the threshold value can be freely selected between 20 and 1 ppm $NH_3$ slip or 40 to 80% relative activity as described above. Optionally, the injection of $NO_2$ in intervals is combined with increasing the temperature in the SCR converter as described above. Within the scope of the present invention, it is possible to measure either only the relative activity of the SCR converter or only the NH3 slip, or to measure both. Preferably, the $NH_3$ slip is measured, either in combination with the outlet $NO_x$ concentration or in combination with the measurement of the relative activity of the SCR converter.

In case of an injection of $NO_2$ in intervals, the amount of $NO_2$ injected is 0 ppm during the period of time when no injection takes place, and it is larger than 0 ppm when the injection takes place.

The preferred ranges for the amount of $NO_2$ to be applied are given above, and these ranges apply for both the continuous injection of $NO_2$ and the injection of $NO_2$ in intervals during the period of time when the injection takes place.

In a preferred embodiment, the gas containing nitrogen dioxide is injected in intervals.

The time required for the regeneration of the SCR converter resp. the SCR catalyst depends on the amount of ammonia, the amount of ABS and/or AS, the amount of catalyst, the amount of $NO_2$ injected, and also of the temperature within the SCR converter. The skilled person knows how to adjust these parameters, and he can make use of this knowledge without departing from the scope of the claims.

The source of $NO_2$ can be $NO_2$ which is ready for use and stored, for instance, in a gas cylinder, bottle or container. Alternatively, the $NO_2$ can be formed externally to the exhaust gas cleaning system in an exhaust gas channel, and the thus prepared $NO_2$ can then be injected into the exhaust gas or flue-gas of the combustion facility as described above. The external formation of $NO_2$ can be carried out, for example, as disclosed in WO 2018/184921 A1.
Ammonia can be oxidized to NO, and the NO is then further oxidized to $NO_2$.
Ammonia oxidation to NO is usually performed in a reactor with a precious metal catalyst, typically platinum or an alloy of platinum with other precious metals as minor components at reaction temperatures of between 250 and 800°C in the presence of an oxygen containing atmosphere, for example air.
To provide the required reaction temperature, the oxidation reactor can be heated by e.g. electrical heating or induction heating.
In an embodiment, the oxygen containing atmosphere includes hot recirculated engine exhaust gas. This hot gas additionally provides part of the oxidation reactor heating duty. NO formed from $NH_3$ by oxidation of the $NH_3$ in contact with a precious metal containing catalyst in a first step, is subsequently oxidized to $NO_2$ in the NO containing effluent gas from the first step by cooling the gas to ambient temperature in order to push the equilibrium reaction

$$2\ NO + O_2 \rightleftarrows 2\ NO_2 \qquad (12)$$

Towards the formation of $NO_2$ in the above reaction scheme.
The term "ambient temperature" as used herein shall mean any temperature prevailing in the surroundings of a vehicle or stationary engine employing the method and system of the invention. Typically, the ambient temperature will be between -20°C and 40°C.

Cooling and oxidation of the NO containing effluent gas can be performed in an aging reactor sized so that the residence time of the gas is about 1 minute or longer. In an embodiment the oxidation reaction is performed in presence of a catalyst promoting the oxidation of NO to $NO_2$. These catalysts are known in the prior art and include Pt on $TiO_2$, Pt on $SiO_2$ and activated carbon.

## Brief description of the Drawings

**Fig. 1** shows the thermal regeneration of the catalyst according to comparative embodiment 1. The catalyst was deactivated for 300 hrs. at 175°C with 20 ppm $SO_2$ and then thermally regenerated at 350°C for 18.65 hrs. The $NO_x$ conversion and the ammonia slip are depicted in Fig. 1.

**Fig. 2** shows the regeneration of an ABS deactivated catalyst at 175°C and 225°C, respectively, according to Embodiment 1. Standard Conditions during all measurements: 3.75 $Nm^3$/hr. containing 13% $O_2$, 8% $H_2O$, 100 ppm $NO_x$, ANR = 1.0 in $N_2$ and 175°C during SCR measurement. **1:** Deactivation at 175°C standard flow + $SO_2$ = 20 ppm during the first 17 hrs. and $SO_2$ = 80 ppm during the rest. **2:** Check of thermal regeneration at 175°C, same as in **1,** but without $SO_2$. **3:** $NO_2$ regeneration at 175°C, the same as in **2,** but with $NO_2/NO_x$ = 0.5. **4:** Same as in **3,** but know without $NH_3$ (ANR =0), **5:** $NO_2$ regeneration at 225°C, same as in **4,** but the regeneration was now performed at 225°C, measurements still done at 175°C.
The ANR is the ammonia to $NO_x$ ratio.

**Fig. 3:** Part **1:** Deactivation of the catalyst at 225°C, at both Q = 12.5 $Nm^3$/hr. and 3.75 $Nm^3$/hr. and both 30 ppm $SO_2$ and 80 ppm $SO_2$ according to Embodiment 2. Part **2:** Is a check of thermal stability of the deactivated catalyst at 225°C without $SO_2$ in the gas. Part **3:** Is regeneration by $NO_2$ at 225°C, using a flow of 12.5 $Nm^3$/hr. containing 13% $O_2$, 8% $H_2O$, 200 ppm $NO_x$, $NO_2/NO_x$ = 0.5, ANR = 0.8 in $N_2$.

**Fig. 4** represents an enlargement of Parts 2 and 3 of Figure 3, showing the thermal stability of ABS (Part **2**) and the $NO_2$ regeneration (Part **3**) according to Embodiment 2.

**Fig. 5** shows the ABS regeneration in the presence of $SO_2$ and during regular SCR reaction according to Embodiment 3.

## Embodiments

In both the comparative embodiment and in the embodiments according to the present invention, the catalyst used is comprised of 3 wt.-% $V_2O_5$ and 3 wt.-% $WO_3$ as the catalytically active metal oxide, and the remainder was $TiO_2$ as the carrier material.

In all embodiments presented hereinafter, NO and $NO_2$ were measured by a chemiluminescence detector, and the measurement of $NH_3$ was carried out by FTIR.

### Comparative Embodiment 1: Thermal regeneration of the catalyst

In a comparative embodiment, the catalyst was deactivated for 300 hrs. at 175°C in a flow of 3.75 $Nm^3$/h containing 13% $O_2$, 8% $H_2O$, 100 ppm $NO_x$, ANR = 1.0, 20 ppm $SO_2$ in $N_2$. The initial $NO_x$ conversion was 95.4% at 175°C measured without $SO_2$ present, and after 300 hrs. the conversion had decreased to 51.7% $NO_x$ conversion. The catalyst was heated to 350°C for 18.65 hrs. after which the $NO_x$ conversion at 175°C was remeasured to be 98.16%.

The $NO_x$ conversion and the ammonia slip were determined. They are shown in Fig. 1.

**Table 1: Deactivation of a catalyst for 300 h, followed by a thermal regeneration at 350°C for 18.65 h, followed by a DeNOx measurement at 175°C**

| Time [hr.] | $NO_x$ conversion [%] | $NH_3$ slip [ppm] |
|---|---|---|
| 0 | 95.42 | 12,7 |
| 16.08 | 93.53 | 13.6 |
| 35.55 | 92.99 | 15.5 |

(continued)

| Time [hr.] | $NO_x$ conversion [%] | $NH_3$ slip [ppm] |
|---|---|---|
| 56.2 | 91.07 | 16.9 |
| 78.25 | 87.92 | 21.3 |
| 144.53 | 76.1 | 32.2 |
| 169.7 | 69.4 | 37.9 |
| 209.63 | 63 | 43.8 |
| 234.2 | 58.92 | 46.1 |
| 299.9 | 51.65 | 54 |
| 318.65 | 98.16 | 6 |

The results are shown in Figure 1.

It is shown that the catalyst can be thermally regenerated by heating to a temperature of 350°C. The final activity is measured a bit higher than initially, which is expected to be due to sulfates bound on the surface of the catalyst, which is known to increase the activity of the catalyst in a small portion, and they are typically stronger bonded than the physical blocking ABS.

**Embodiment 1: Regeneration of an ABS deactivated catalyst at 175°C and 225°C**

The catalyst was deactivated as described under Comparative Embodiment 1 using a total flow of 3.75 $Nm^3$/hr. containing 13% $O_2$, 8% $H_2O$, 100 ppm $NO_x$, ANR = 1.0 in $N_2$ for 83 hours. The first 17 hours 20 ppm of $SO_2$ was used, and to speed up the deactivation, 80 ppm of $SO_2$ was used the last 66 hours.

**Table 2: Regeneration of an ABS deactivated catalyst at 175°C and 225°C and $NO_x$ conversion and $NH_3$ slip measured.**

| Time [hr.] | $NO_x$ conversion [%] | $NH_3$ slip [ppm] |
|---|---|---|
| 0 | 98.16 | 6 |
| 83 | 53.51 | 53.2 |
| 104 | 55.42 | 52.8 |
| 174.55 | 60.63 | 41.1 |
| 242.53 | 63.43 | 38.4 |
| 265 | 80.3 | 27.9 |
| 292.4 | 89.5 | 20.5 |

The results are shown in Fig. 2.

Fig. 2, Part **2** shows the catalyst without deactivating components before starting the addition of $NO_2$. In Part **3,** 50 ppm $NO_2$ was added to a total $NO_x$ concentration of 100 ppm, i.e. $NO_2/NO_x$ = 0.5 at 175°C. At a temperature of 175°C it was expected that the catalyst would regenerate from ABS, as it was described, for instance, in Wang et al., Appl Catal A 2018, 559, 112-121 and in Wang et al., Energy Fuels 2018, 32, 6990-6994, wherein 10% $DeNO_x$ was observed with 250 ppm $NO_2$. It was therefore expected with the long timeframe that the catalyst would regenerate even with the lower concentration of 50 ppm $NO_2$. In order to test if the $NO_2$ was too quickly consumed by the fast SCR reaction, $NH_3$ was shut off during Part **4,** which did not change the reactivation of the catalyst. It was found that the catalyst did slowly regenerate, however, to speed up the process the temperature was increased to 225°C In Part **5,** still keeping the $NO_2/NO_x$ ratio at 0.5 and still without $NH_3$, the SCR activity (the points in the plot) was still measured at 175°C. As shown in Figure **4** at 225°C, the catalyst started regenerating.

**Embodiment 2: Regeneration of an ABS deactivated catalyst with $NO_2$ at 225°C**

In Embodiment 1 it was found that a temperature of 175°C was found to lead to a rather slow regeneration of the catalyst. Therefore, in Embodiment 2, the temperature was increased to 225°C. At 225°C, the DeNOx would be 100% conversion with the same flow rate as used during the 175°C experiments, therefore a new set of "standard" conditions were made: Q=12.5 $Nm^3$/hr. with 13% $O_2$, 8% $H_2O$, 200 ppm $NO_x$, ANR = 0.8 in $N_2$.

At the new test conditions, the catalyst was initially deactivated using 30 ppm $SO_2$, however, even after 143 hrs., the catalyst was not deactivated sufficiently. Therefore, the flow rate was decreased to 3.75 $Nm^3$/hr. with 13% $O_2$, 8% $H_2O$, 200 ppm $NO_x$, ANR = 0.8 with 80 ppm $SO_2$ in $N_2$, for an additional 65 hours. An additional deactivation for 100 hrs. was performed at the high flow rate resulting in a total deactivation time of 305 hrs., the final activity is shown in Figure 3, Part **1.**

To ensure that the catalyst was not thermally regenerated at a temperature of 225°C in the absence of $SO_2$, an isotherm was kept at 225°C for 168 hrs., without adding any $NO_2$. Figure 3, Part **2** shows that the low thermal treatment did not reactivate the catalyst.

Therefore, regeneration at 225°C was performed, using a flow of 12.5 $Nm^3$/hr. containing 13% $O_2$, 8% $H_2O$, 200 ppm $NO_x$, $NO_2/NO_x$ = 0.5, ANR = 0.8 in $N_2$, and after 19 hours of operation with $NO_2$, the activity was measured (without $NO_2$) and the relative activity (TF) had increased from 0.5 to 0.9, and the $NH_3$ slip changed from 50 ppm to 8.2 ppm. An additional 20 hours of regeneration (total of 39 hrs.) resulted in a TF of 0.95 and additional 16 hours resulted in a TF of 0.97 and an $NH_3$ slip of 5.25 ppm, the regeneration is shown in Figure 3, Part **3.**

**Table 3: Regeneration of an ABS deactivated catalyst with $NO_2$ at 225°C, and $NO_x$ conversion and $NH_3$ slip measured.**

| Time [hr.] | $NO_x$ conversion [%] | $NH_3$ slip [ppm] |
|---|---|---|
| 0 | 85.3 | 3.4 |
| 208 | 76.1 | 20.1 |
| 323 | 60.0 | 51.7 |
| 373.3 | 59.9 | 51.0 |
| 467 | 61.3 | 50.0 |
| 486.5 | 82.01 | 8.2 |
| 506.2 | 84.1 | 5.85 |
| 521.83 | 84.39 | 5.25 |

Figure 4 represents an enlargement of Parts 2 and 3 of Figure 3, showing the thermal stability of ABS (Part **2**) and the $NO_2$ regeneration (Part 3).

At a temperature of 225°C, it was clearly possible to do a fast regeneration of the catalyst from ABS deactivation by adding $NO_2$ to the flue gas.

**Embodiment 3: ABS regeneration in the presence of $SO_2$ and during regular SCR reaction**

It was tested how fast and if a catalyst could be regenerated by adding $NO_2$ in higher concentration for a shorter period while $SO_2$ was present and while the regular SCR reaction was also taking place. The experiments were designed to simulate a plant in operation. Therefore, the catalyst was regenerated by adding $NO_2$ without changing the flow of $NH_3$ (i.e. $NH_3$/NO = 0.8, but $NH_3/NO_x$ < 0.8). Furthermore, it was tested whether the addition of a large concentration of $NO_2$ would increase the deactivation when $SO_2$ was also present, or whether an increased amount of $NO_2$ would induce a higher $SO_2$ oxidation.

All SCR experiments in this series were measured using a total flow rate of 12.5 $Nm^3$/hr. containing 13% $O_2$, 8% $H_2O$, 200 ppm NO, ANR = 0.8, 0 ppm $SO_2$ in $N_2$. The catalyst was deactivated afterwards for 140 hours at a low flow rate of 3.75 $Nm^3$/hr. containing 13% $O_2$, 8% $H_2O$, 200 ppm NO, ANR = 1.2, ~80 ppm $SO_2$ at 225°C.

After the deactivation, the catalyst was kept for 18 hours with SCR conditions, but without $SO_2$ or $NO_2$, to ensure that thermal regeneration was not happening. The catalyst was found stable as shown by the negative part of the x-axis given in Figure 5. Afterwards, regeneration was started using a total flow of 12.5 $Nm^3$/hr. containing 13% $O_2$, 8% $H_2O$, 200 ppm NO, 560 ppm $NO_2$, 170 ppm $NH_3$, 30 ppm $SO_2$ in $N_2$ at 225°C, and the results are shown in Figure 5.

In Figure 5, the regeneration of the catalyst is shown as a function of time with $NO_2$ flow, however, it should be noted that after the end of the regeneration, the catalyst was left statically for 12 hours to ensure steady-state and flushing of all $NO_2$ and $SO_2$. The actual timeframe is therefore longer than indicated in Figure 5.

It is noted that the regeneration of the catalyst at 225°C is achieved within 11 hours at which a $TF_{225°C}$ = 0.96

and an $NH_3$ slip of 5.07 ppm was measured compared to Embodiment 2 with a lower $NO_2$ concentration where a $TF_{225°C}$ = 0.95 and an $NH_3$ slip of 5.25 ppm first was achieved after 39 hours. TF represents the relative activity of the $NO_x$ conversion and $NH_3$ slip is the measured $NH_3$ at the outlet as defined above. The $NO_2$ concentration was increased by more than 5 times in Embodiment 3 (560 ppm vs. 100 ppm) compared to the Embodiment 2, without changing the $NH_3$ concentration, and the time used was decreased by a factor 4, showing that the regeneration time can be changed by changing the $NO_2$ concentration. This also means if a multiple layer catalyst has to be regenerated by $NO_2$, the bottom layer will be regenerated slower than the top layer, however, typically the top layer is also the one with highest ABS deactivation due to highest $NH_3$ and $SO_3$ concentrations.

A long regeneration time over a total of 36 hours with the high $NO_2$ concentration was performed $TF_{225°C}$ = 0.96 as given by the final point in Figure 6. After the final regeneration, the catalyst was left for 92 hours at 225°C with SCR conditions, but without $SO_2$ and $NO_2$ followed by an SCR measurement. The measurement showed that the catalyst only had increased a bit in activity and hence the regeneration was stable.

**Table 4: Regeneration of an ABS deactivated catalyst with 560 ppm $NO_2$ at 225°C with 30 ppm $SO_2$ present, and $NO_x$ conversion and $NH_3$ slip measured.**

| Time [hr.] | $NO_x$ conversion [%] | $NH_3$ slip [ppm] |
|---|---|---|
| -18.00 | 63.28 | 42.29 |
| 0.00 | 63.22 | 41.73 |
| 2.00 | 73.92 | 17.94 |
| 4.42 | 78.92 | 10.88 |
| 6.67 | 80.65 | 7.04 |
| 11.00 | 82.10 | 6.26 |
| 36.60 | 81.96 | 5.07 |

The initial $NO_x$ conversion was 83.32 %.

## Claims

**1.** A method for the removal of ammonium bisulfate and/or ammonium sulfate from a selective catalytic reduction converter, wherein the selective catalytic reduction converter is selected from substrates coated and/or impregnated with a selective catalytic reduction catalyst, extruded SCR converters, and SCR plate catalysts, and wherein the combustion facility comprises means for measuring the relative activity of the $NO_x$ conversion and/or the $NH_3$ slip concentration of the selective catalytic reduction converter, and wherein the method comprises the steps of

- passing flue gas through a converter for the selective catalytic reduction of nitrogen oxides in the presence of ammonia added to the flue gas either as such or in the form of a precursor thereof,
- injecting a gas containing nitrogen dioxide into the flue gas upstream of the converter for selective catalytic reduction at a flue gas temperature of between 150 and 330°C,

  ◦ wherein the gas containing nitrogen dioxide is added in an amount that keeps the relative activity of the selective reduction catalyst at a value of higher than or equal to 40 %
  and/or
  ◦ wherein the gas containing nitrogen dioxide is added in an amount that keeps the $NH_3$ slip below 20 ppm $NH_3$.

**2.** The method according to claim 1, wherein the selective catalytic reduction catalyst contains a carrier material selected from $TiO_2$, $SiO_2$, $Al_2O_3$ or mixtures thereof, and $V_2O_5$ and optionally $WO_3$ and/or $MoO_3$ as the catalytically active metal oxides.

**3.** The method according to claim 2, wherein the catalytically active metal oxide comprises 0.1 to 20 wt.-% $V_2O_5$, 0 to 10 wt.-% of $WO_3$ and/or $MoO_3$, and 0-20 wt.-% of $SiO_2$, and wherein the remainder is represented by $TiO_2$, $Al_2O_3$ or mixtures of $TiO_2$ and $Al_2O_3$.

4. The method according to claims 2 and 3, wherein the carrier material is doped with 0.05 to 5 wt.-% of an oxide selected from oxides of lanthanum, oxides of zirconium, oxides of cerium and oxides of antimony and combinations and mixtures thereof.

5. The method according to any one of claims 1 to 4, wherein the substrate of the selective catalytic converter is a wall flow-filter, a flow-through monolith, a ceramic candle filter, a corrugated substrate, a bag filter or catalyst pellets.

6. The method according to any one of claims 1 to 5, wherein the ammonia added to the flue gas either as such or in the form of a precursor thereof is selected from aqueous ammonia, anhydrous ammonia, an aqueous urea solution, an aqueous ammonium formate solution and ammonium carbamate.

7. The method according to any one of claims 1 to 6,wherein the injection of a gas containing nitrogen dioxide into the flue gas upstream of the converter for selective catalytic reduction takes place continuously.

8. The method according to any one of claims 1 to 6,wherein the injection of a gas containing nitrogen dioxide into the flue gas upstream of the converter for selective catalytic reduction takes place in intervals.

9. The method according to any one of claims 1 to 8, wherein nitrogen dioxide is injected in such an amount that the total amount of $NO_2$ in the selective catalytic reduction converter is permanently larger than 0 ppm and smaller than or equal to 1,000 ppm, and wherein the total amount of $NO_2$ within the selective catalytic reduction converter is the sum of $NO_2$ coming from the uncleaned flue gas plus the amount of $NO_2$ added by injecting a gas containing nitrogen dioxide into the flue gas upstream the selective catalytic reduction converter.

10. The method according to any one of claims 1 to 9, wherein the effluent gas containing nitrogen dioxide is added in an amount that keeps the relative activity of the selective catalytic reduction catalyst at a value of higher than or equal to 80 %.

11. The method according to any one of claim 1 to 10, wherein the effluent gas containing nitrogen dioxide is added in an amount that keeps the ammonia slip of the selective catalytic reduction catalyst at a value of below 20 ppm $NH_3$.

Fig. 1

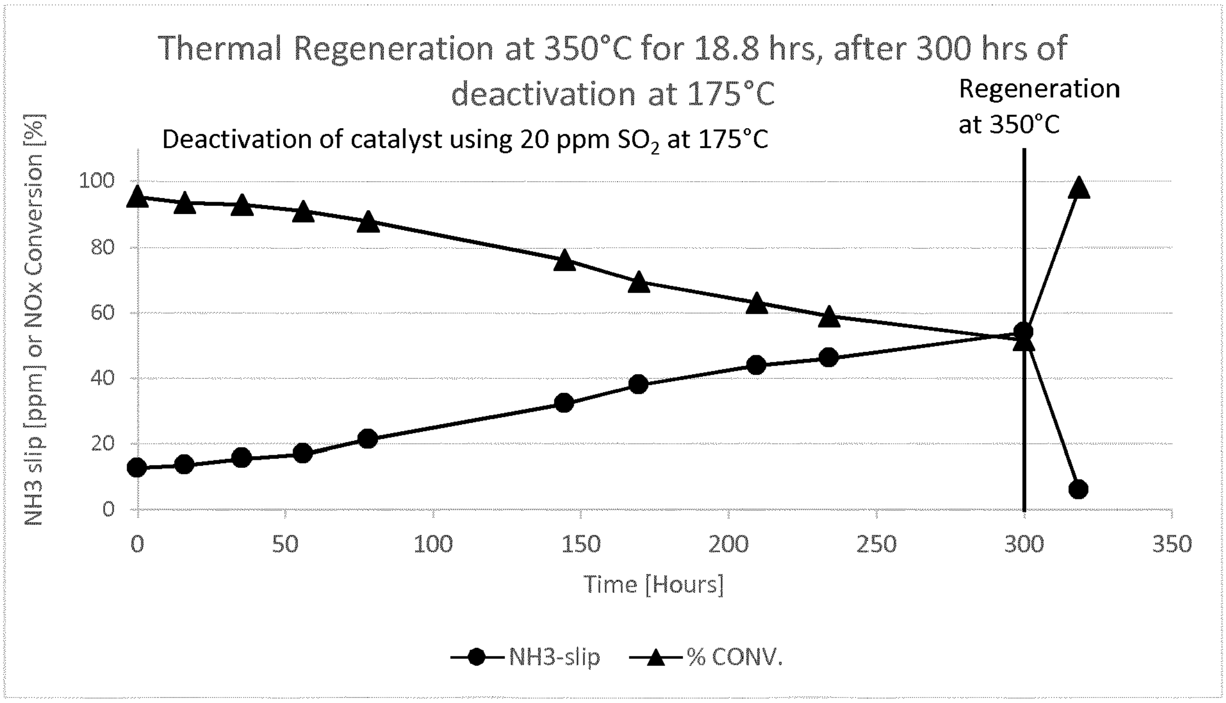
Thermal Regeneration at 350°C for 18.8 hrs, after 300 hrs of deactivation at 175°C
Regeneration at 350°C
Deactivation of catalyst using 20 ppm SO2 at 175°C
NH3 slip [ppm] or NOx Conversion [%]
0
20
40
60
80
100
0
50
100
150
200
250
300
350
Time [Hours]
NH3-slip
% CONV.

Fig. 2

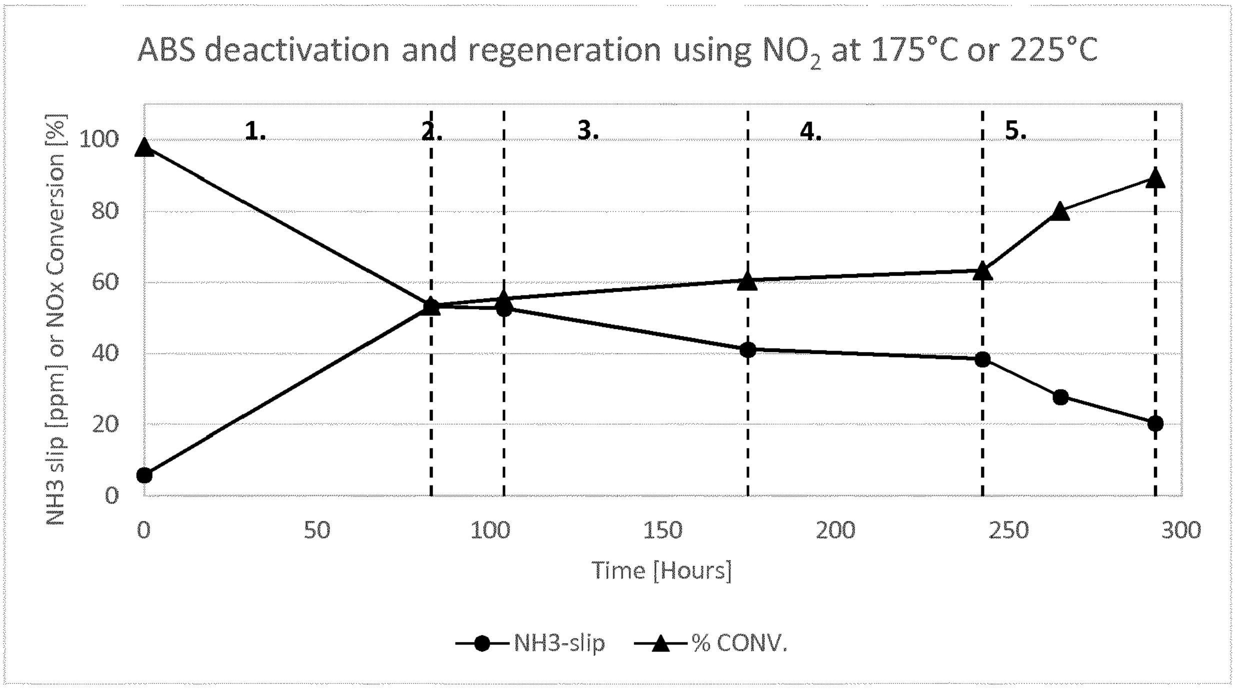
ABS deactivation and regeneration using NO2 at 175°C or 225°C
1.
2.
3.
4.
5.
NH3 slip [ppm] or NOx Conversion [%]
0
20
40
60
80
100
0
50
100
150
200
250
300
Time [Hours]
NH3-slip
% CONV.

Fig. 3

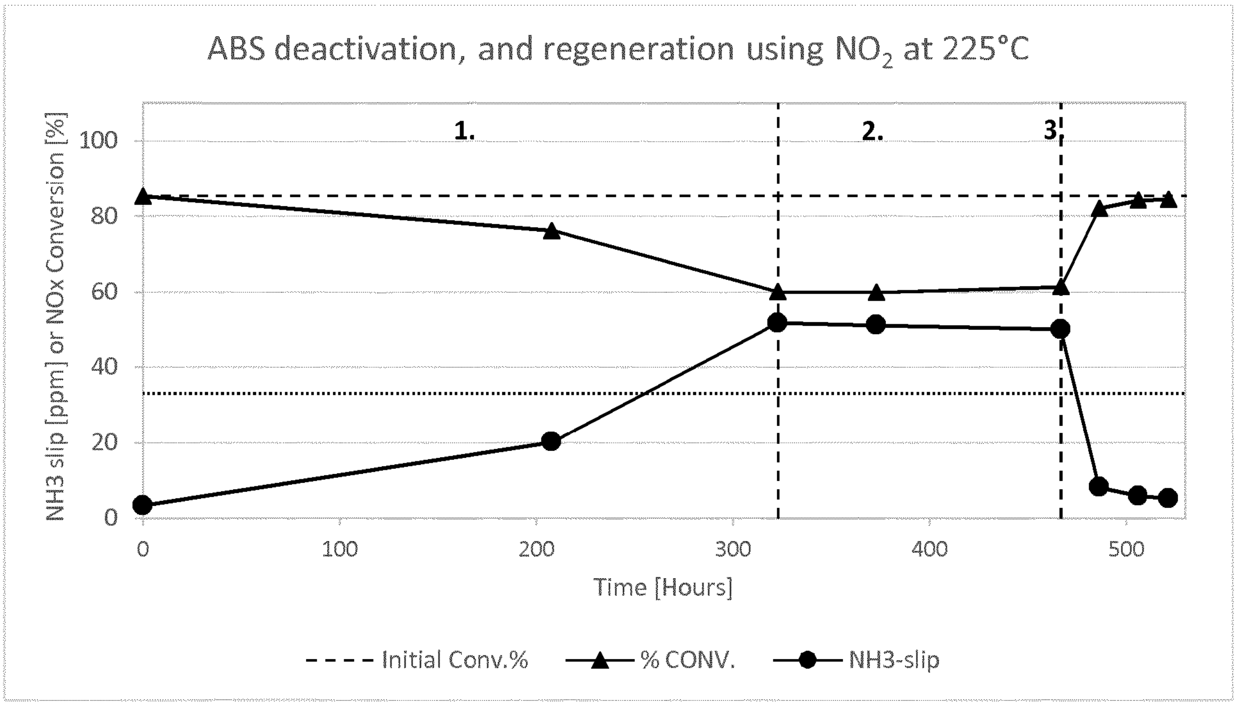
ABS deactivation, and regeneration using $NO_2$ at 225°C
1.
2.
3.
NH3 slip [ppm] or NOx Conversion [%]
100
80
60
40
20
0
0
100
200
300
400
500
Time [Hours]
Initial Conv.%
% CONV.
NH3-slip

Fig. 4

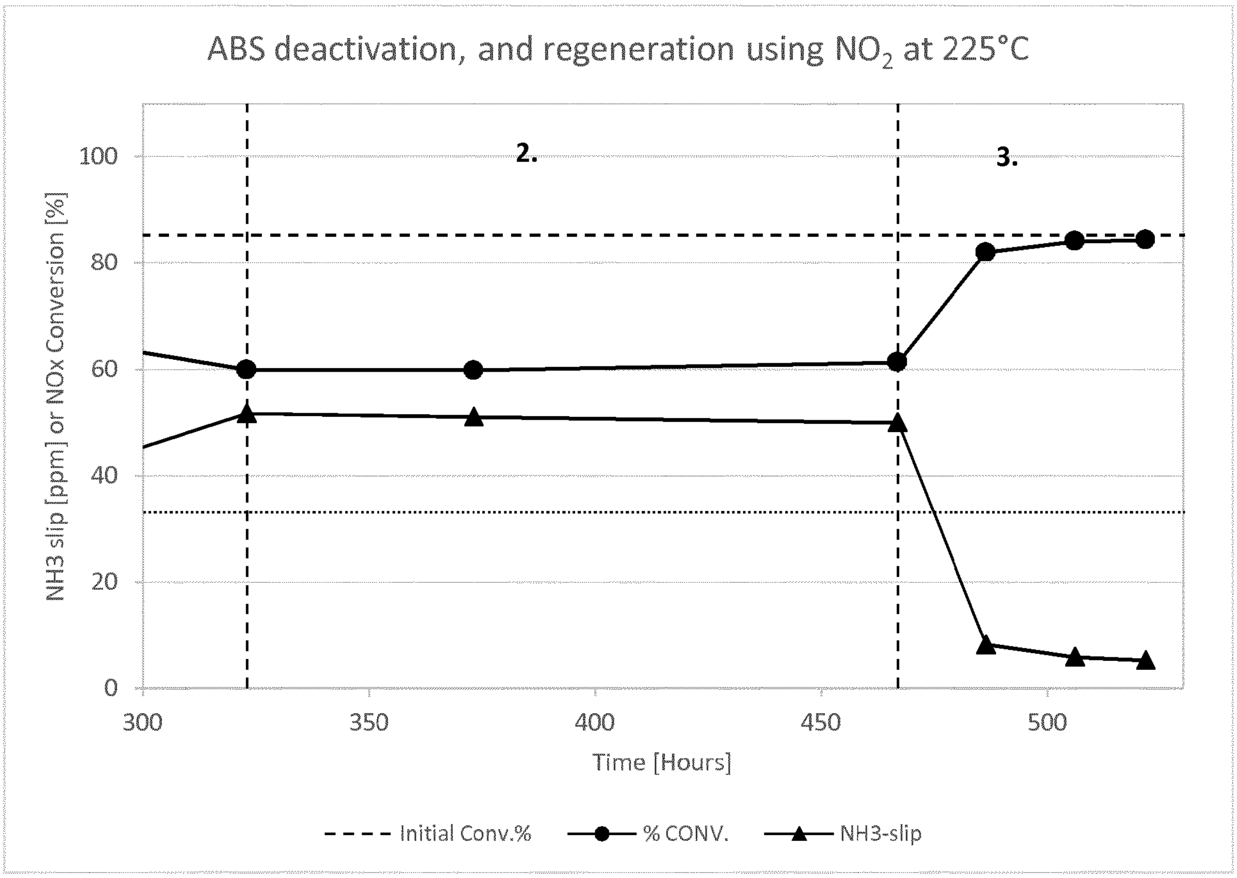
ABS deactivation, and regeneration using $NO_2$ at 225°C
2.
3.
NH3 slip [ppm] or NOx Conversion [%]
100
80
60
40
20
0
300
350
400
450
500
Time [Hours]
Initial Conv.%
% CONV.
NH3-slip

Fig. 5

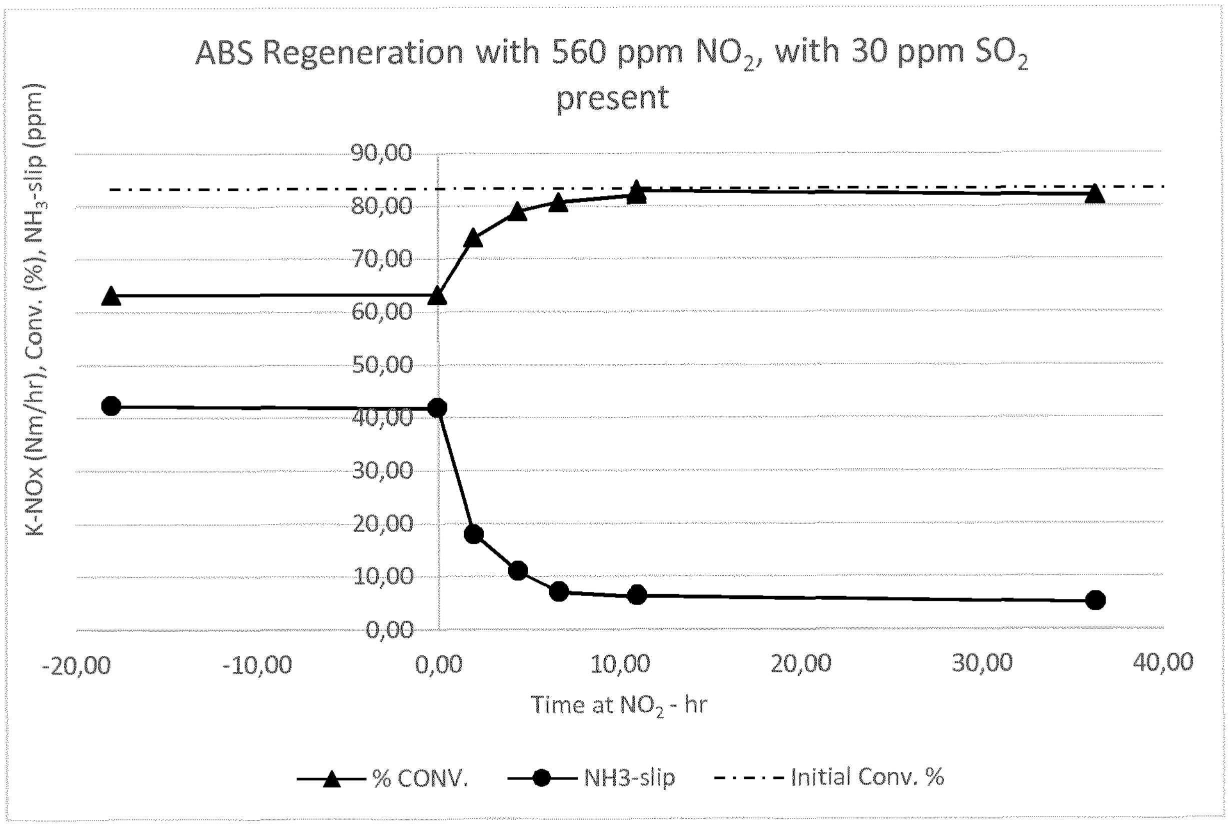
ABS Regeneration with 560 ppm $NO_2$, with 30 ppm $SO_2$ present
K-NOx (Nm/hr), Conv. (%), $NH_3$-slip (ppm)
90,00
80,00
70,00
60,00
50,00
40,00
30,00
20,00
10,00
0,00
-20,00
-10,00
0,00
10,00
20,00
30,00
40,00
Time at $NO_2$ - hr
% CONV.
NH3-slip
Initial Conv. %

Europäisches Patentamt
European Patent Office
Office européen des brevets

# EUROPEAN SEARCH REPORT

Application Number
EP 19 20 6941

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | XIANGMIN WANG ET AL: "Simultaneous Fast Decomposition of NH4HSO4 and Efficient NOx Removal by NO2 Addition: An Option for NOx Removal in H2O/SO2-Contained Flue Gas at a Low Temperature", ENERGY & FUELS., vol. 32, no. 6, 24 May 2018 (2018-05-24), pages 6990-6994, XP055684393, WASHINGTON, DC, US. ISSN: 0887-0624, DOI: 10.1021/acs.energyfuels.8b01455 * abstract * * "1. Introduction", "2. Experimental section", "3.1 Reactions of NH4HSO4 in Different Atmospheres.", "4. Conclusion"; figures 2, 4; table 1 * ----- | 1-11 | INV. B01J38/04 B01J23/22 B01J23/28 B01J23/30 B01D53/86 ADD. B01J38/02 B01D53/94 B01J35/04 |
| X,D | XIANGMIN WANG ET AL: "Promotion of NH4HSO4 decomposition in NO/NO2 contained atmosphere at low temperature over V2O5-WO3/TiO2 catalyst for NO reduction", APPLIED CATALYSIS A: GENERAL, vol. 559, 22 April 2018 (2018-04-22), pages 112-121, XP055684426, AMSTERDAM, NL ISSN: 0926-860X, DOI: 10.1016/j.apcata.2018.04.025 * abstract * * "1. Introduction", "2.1 Preparation of samples", "2.2 SCR performance measurement", "3.3 Reactions of NH4HSO4 in different atmospheres", "4. Conclusions"; figures 1, 5, 10 * ----- | 1-11 | TECHNICAL FIELDS SEARCHED (IPC): B01J B01D |

-/--

The present search report has been drawn up for all claims

1

| Place of search | Date of completion of the search | Examiner |
|---|---|---|
| Munich | 9 April 2020 | Schön, Anke |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 19 20 6941

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 107 376 930 A (UNIV CHONGQING) 24 November 2017 (2017-11-24) * abstract; figures 1, 3 * * pages 1-3 * * page 4, paragraph 1-4 * * page 5, paragraphs 2-4, 7 * * page 6, paragraph 5 * ----- | 1-11 | |

TECHNICAL FIELDS SEARCHED (IPC)

1

The present search report has been drawn up for all claims

| Place of search | Date of completion of the search | Examiner |
|---|---|---|
| Munich | 9 April 2020 | Schön, Anke |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 2 of 2

## ANNEX TO THE EUROPEAN SEARCH REPORT ON EUROPEAN PATENT APPLICATION NO. EP 19 20 6941

This annex lists the patent family members relating to the patent documents cited in the above-mentioned European search report. The members are as contained in the European Patent Office EDP file on
The European Patent Office is in no way liable for these particulars which are merely given for the purpose of information.

09-04-2020

| Patent document cited in search report | Publication date | Patent family member(s) | Publication date |
|---|---|---|---|
| CN 107376930 A | 24-11-2017 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2018184921 A1
- WO 2018197175 A1


### Non-patent literature cited in the description


- **H YUFENG ; X JIANMING.** The Effects of Flue Gas SO3 on the Operation of Coal-Fired Units and Countermeasures. *IJEPE,* 2018, vol. 7, 27-32
- **X WANG ; X DU ; L ZHANG ; G YANG ; Y CHEN ; J RAN.** Simultaneous Fast Decomposition of NH4HSO4 and Efficient NOx Removal by NO2 Addition: An Option for NOx Removal in H2O/SO2-Contained Flue Gas at a Low Temperature. *Energy Fuels,* 2018, vol. 32, 6990-6994
- **X WANG ; X DU ; L ZHANG ; Y CHENG ; G YANG.** Promotion of NH4HSO4 decomposition in NO/NO2 contained atmosphere at low temperature over V2O5-WO3/TiO2 catalyst for NO reduction. *Appl Catal A,* vol. 2018
- **WANG et al.** *Appl Catal A,* 2018, vol. 559, 112-121
- **WANG et al.** *Energy Fuels,* 2018, vol. 32, 6990-6994